# EUROPÄISCHE PATENTSCHRIFT

(11) **EP 1 832 851 B1**
(45) Veröffentlichungstag und Bekanntmachung des Hinweises auf die Patenterteilung: **23.12.2009**
(21) Anmeldenummer: 07004615.6
(22) Anmeldetag: 06.03.2007
(51) Int. Cl.: G01D 3/02, G01D 5/14

(54) **Positionsgeber für ein Stellelement, Linearmotor und Verfahren zum Herstellen eines Linearmotors**
Encoder for an actuator, linear induction motor and method for manufacturing a linear motor
Indicateur de position pour un élément de commande, moteur linéaire et procédé de fabrication d'un moteur linéaire

(30) Priorität: 09.03.2006 DE 102006010945
(43) Veröffentlichungstag der Anmeldung: 12.09.2007
(73) Patentinhaber: MINEBEA Co., Ltd., Kitasaku-gun, Nagano-Ken 389-0293 (JP)
(72) Erfinder: Popov, Vladimir Vladimirovich, 78052 Villingen-Schwenningen (DE); Heizmann, Joachim, 78194 Immendingen (DE); Kreiensen, Ullrich, 78652 Deisslingen (DE)
(74) Vertreter: Liesegang, Eva

(56) Entgegenhaltungen:
- WO-A-2005/119179
- DE-A1-102004 021 256

## Beschreibung

Die Erfindung betrifft einen Positionsgeber für ein Stellelement, das innerhalb eines Verstellbereichs in einer vorgegebenen Richtung linear verschoben wird. Ferner betrifft die Erfindung einen Linearmotor und ein Verfahren zu dessen Herstellung.

Die DE 10 2004 021 256 A1 beschreibt einen Linear-Schrittmotor mit einer in Längsrichtung innerhalb des Motorgehäuses verschiebbaren Stellspindel. Der Motor umfaßt eine Sensorvorrichtung mit einem an der Stellspindel befestigten Dauermagneten und einem am Motorgehäuse befestigten Hall-Sensor. Bei einer Bewegung der Stellspindel innerhalb des Gehäuses und somit einer Relativbewegung von Dauermagnet und Hall-Sensor wird ein Signal erzeugt, aufgrund dessen eine Referenzposition der Stellspindel relativ zu dem Gehäuse ermittelt werden kann.

Die DE 44 27 278 C2 beschreibt eine Längenmeßeinrichtung mit einem Grenzlagenschalter bestehend aus einem oder mehreren Hallgeneratoren, der relativ zu einer Maßverkörperung in Meßrichtung verschoben wird. An der Maßverkörperung ist im Bereich der Grenzlagen jeweils ein Magnet angebracht. Wenn der Hallgenerator in den Einflußbereich des Magnetfeldes eines dieser Magneten kommt, wird aufgrund der erzeugten Hallspannung ein Abschaltsignal erzeugt. Zur Überwachung der Funktion der Meßeinrichtung ist einem zu überwachenden Hallgenerator ein weiterer Magnet stationär zugeordnet, beispielsweise aufgeklebt. Dieser Magnet erzeugt permanent ein Magnetfeld, durch das eine Hall-Vorspannung erzeugt wird. Bei einer Störung des Meßsystems, sei es ein Ausfall der Spannungsversorgung, ein Defekt der Leitungen oder des Hallgenerators, sinkt diese Hall-Vorspannung auf 0 Volt. Dieser Hall-Vorspannung wird eine Meßspannung überlagert, welche durch den an der Maßverkörperung angebrachten Magneten erzeugt wird. Wenn die Meßspannung einen definierten Schwellwert unterschreitet, wird ein Fehlersignal erzeugt.

Die DE 42 10 934 C2 beschreibt ein Verfahren zur Ermittlung einer Referenzposition eines beweglichen Teils, das mit der Spindel eines Linearmotors verbunden ist. Die Lage des beweglichen Teils wird weitgehend temperaturunabhängig bestimmt, indem ein als Referenzmarke dienendes magnetisches Element, das ungefähr in der Mitte der Spindel angeordnet ist, von einem ersten Hallsensor abgetastet wird und das Ausgangssignal dieses Hallsensors so ausgewertet wird, daß das magnetische Element zuerst in der einen und dann in der anderen Richtung am Hallsensor vorbeigeschoben wird. Die jeweils auftretenden Schaltpunkte werden gespeichert, und der Mittelpunkt zwischen den zwei sich ergebenden Schaltpunkten wird als Referenzposition gewonnen.

Der erfindungsgemäße Positionsgeber soll in seiner bevorzugten Anwendung die Position einer Stellstange, die beispielsweise in einem Schrittmotor linear verstellt wird, bei einer oder zwei Referenzlagen erfassen. Für diese Aufgabe eignet sich grundsätzlich die in der DE 10 2004 021 256 A1 beschriebene Sensorvorrichtung. Bei dieser Sensorvorrichtung besteht jedoch das Problem, das die von dem Dauermagneten erzeugte Feldstärke temperaturabhängig ist. Ferner erzeugt der Hallsensor beim Überstreichen des Dauermagneten im Bereich der Referenzposition keine Ausgangskennlinie mit einer scharf definierten Flanke, so daß die Ermittlung einer bestimmten Referenzposition des Dauermagneten aufgrund von Temperaturschwankungen und unterschiedlichen Neigungen der Ausgangskerinlinie des Hallsensors fehlerbehaftet ist.

Die DE 44 27 278 C2 offenbart ein System zur Überwachung einer magnetischen Längenmeßeinrichtung bezüglich Störungen, gibt jedoch keinen Hinweis auf eine Verbesserung des Meßsystems hinsichtlich seiner Genauigkeit.

Die WO 2005/119179 A1 beschreibt ein Positionsgeber für zwei relativ zueinander bewegliche Teile. Eine Stellstange ist entlang ihrer gesamten Länge auf bestimmte Weise unregelmäßig magnetisiert und wirkt mit mehreren Hallsensoren zusammen, um die Absolutposition der Stellstange zu ermitteln. Zur Verbesserung der Signalqualität ist ein Rückschlusselement vorgesehen, welches einen der Hallsensoren umgibt.

Der Erfindung liegt die Aufgabe zugrunde, einen Positionsgeber für ein Stellelement anzugeben, der mit höherer Genauigkeit arbeitet als die Systeme des Standes der Technik.

Diese Aufgabe wird durch ein Positionsgeber mit den Merkmalen von Patentanspruch 1 sowie durch einen Linearmotor gemäß Patentanspruch 8 gelöst.

Ferner sieht die Erfindung ein Verfahren zum Herstellen eines Linearmotors gemäß Patentanspruch 16 vor.

Die Erfindung sieht einen Positionsgeber für ein Stellelement vor, das innerhalb eines Rahmens in einer vorgegebenen Richtung linear verschoben wird. Vorzugsweise wird der Positionsgeber in einem Linearmotor mit einer Stellstange eingesetzt, die in ihrer Längsrichtung innerhalb des Motorgehäuses verschiebbar ist. Der Positionsgeber umfaßt einen Lagegeber-Magneten und einen Magnetsensor, der dem Lagegeber-Magneten gegenüberliegt. In der bevorzugten Ausführung der Erfindung ist der Lagegeber-Magnet mit dem Stellelement bzw. der Stellstange verbunden, und der Magnetsensor ist mit dem Rahmen bzw. Motorgehäuse gekoppelt. Die Zuordnung kann jedoch auch umgekehrt sein, wobei wesentlich ist, daß aus der Relativbewegung des Lagegeber-Magneten und des Magnetsensors die Position des Stellelementes bzw. der Stellstange im Verhältnis zu dem Rahmen bzw. Motorgehäuse ermittelt werden kann.

Erfindungsgemäß wird bei dem Positionsgeber ein Flußleitstück vorgesehen, das mit dem Lagegeber-Magneten gekoppelt ist. Durch das Vorsehen des Flußleitstückes wird die von dem Magnetsensor erzeugte Induktionskurve im Bereich der Referenzposition des Magnetsensors deutlich steiler als ohne Flußleitstück, so daß die Genauigkeit bei der Ermittlung der Position des Stellelementes bzw. der Stellstange deutlich ansteigt. Dies wird dadurch erreicht, daß das Flußleitstück, die zwei Gegenpole des Lagegeber-Magneten an dessen Stirnende kurzschließt. In einer bevorzugten Ausführung der Erfindung ist das Flußleitstück durch eine weichmagnetische Rückschlußscheibe gebildet, die an einer Stirnseite des Lagegeber-Magneten angeordnet ist, wobei der Magnetsensor eine Signalflanke erzeugt, wenn diese Stirnseite des Lagegeber-Magneten an dem Magnetsensor vorbei bewegt wird. Anstelle einer Rückschlußscheibe kann beispielsweise auch ein zum Lagegeber-Magneten gegensinnig magnetisiertes Magnetstück, ein Kurzschlußblech oder ein einfaches Seitenblech verwendet werden.

In einer bevorzugten Ausführung der Erfindung wird der Positionsgeber in einem Linearmotor zur Bestimmung der Position einer Stellstange eingesetzt. Hierbei werden der Lagegeber-Magnet und das Flußleitstück vorzugsweise auf die Stellstange aufgebracht, wobei das Flußleitstück auf der dem Motor zugewandten Seite des Lagegeber-Magneten angeordnet ist. Der Lagegeber-Magnet ist quer zur Bewegungsrichtung der Stellstange magnetisiert. In einer bevorzugten Ausführung der Erfindung ist die Länge des Lagegeber-Magneten ungefähr gleich der Hälfte der Länge des Verstellweges der Stellstange. Dadurch kann ein Referenzpunkt erhalten werden, der etwa in der Mitte des Verstellweges der Stellstange liegt.

Durch die Verwendung des Flußleitstückes kann ein definierter, steiler und weitgehend temperaturunabhängiger Umschaltpunkt, beispielsweise bei der Polaritätsumkehr des Magnetsensors erhalten werden. Wird der Umschaltpunkt bei dem Polaritätswechsel angeordnet, so können eine Vielzahl von Magnetsensoren eingesetzt werden, beispielsweise neben unipolaren und auch bipolare digitale Hallsensoren sowie analoge Hallsensoren mit entsprechender Signalauswerte-Elektronik. Um den Einfluß der Schalt-Hysterese der Hallsensoren auf die Ermittlung der Referenzlage zu eliminieren, wird die Bestimmung der Referenzposition vorzugsweise immer durch Verfahren der Stellstange in ein und dieselbe Richtung durchgeführt.

In einer bevorzugten Ausführung der Erfindung ist dem Magnetsensor ein Hilfsmagnet zugeordnet, wobei dieser Hilfsmagnet auf der von dem Lagegeber-Magneten abgewandten Seite des Magnetsensors ortsfest zu diesem angebracht ist. Die magnetische Ausrichtung ist zu der des Lagegeber-Magneten entgegengesetzt.

Vorzugsweise haben das Material des Lagegeber-Magneten und das Material des Hilfsmagneten im wesentlichen die gleichen thermischen Eigenschaften. Dadurch wird jede Abweichung der durch den Lagegeber-Magneten in dem Magnetsensor induzierten Kennlinie aufgrund von Temperaturänderungen durch das sich entsprechend ändernde Magnetfeld des Hilfsmagneten kompensiert. Die Ausgangskennlinie des Magnetsensors wird dadurch über einen weiten Temperaturbereich weitgehend temperaturunabhängig. Durch geeignete Auswahl der Magnetisierung, Größe und Abstand des Lagegeber-Magneten und des Hilfsmagneten zu dem Magnetsensor kann die Ausgangskennlinie des Magnetsensors so eingestellt werden, daß sie unabhängig von der Temperatur immer bei exakt derselben Position einen Referenzwert erzeugt.

In einer bevorzugten Ausführung der Erfindung sind der Lagegeber-Magnet und der Hilfsmagnet aus demselben Magnetmaterial hergestellt. Wird dasselbe Magnetmaterial verwendet, so kann sichergestellt werden, daß auch die thermischen Eigenschaften der beiden Magnete gleich sind. In der Praxis kann der Hilfsmagnet deutlich kleiner als der Lagegeber-Magnet ausgeführt werden, wobei in der Regel der Abstand zwischen dem Hilfsmagneten und dem Magnetsensor geringer ist als der Abstand zwischen dem Lagegeber-Magneten und dem Magnetsensor, zwischen denen eine Relativbewegung stattfindet. Es ist möglich, den Hilfsmagneten mit dem Magnetsensor direkt zu verbinden.

Diese Eigenschaft des Positionsgebers gemäß der Erfindung ist besonders vorteilhaft beispielsweise in Automotiv-Anwendungen, in denen das Stellelement zum Einstellen eines Scheinwerfers, eines Außenspiegels oder anderer außen an einem Kraftfahrzeug befindlichen Teile verwendet wird. In diesen Anwendungen muß eine präzise Positionserfassung in Temperaturbereichen von etwa -40° C bis +125° C und darüber hinaus gewährleistet sein.

Erfindungsgemäß kann somit der Positionsgeber über einen weiten Temperaturbereich an der Referenzposition des Lagegeber-Magneten Induktionskurven mit präzisen, steilen Flanken erzeugen, die sämtlich durch einen definierten Referenzpunkt gehen.

Der Magnetsensor ist vorzugsweise ein digitales oder analoges Hallelement, das unipolar oder bipolar arbeiten kann.

Wie erwähnt wird der erfindungsgemäße Positionsgeber beispielsweise in einem Linearmotor zur Bestimmung der Position einer Stellstange eingesetzt, wobei der Lagegeber-Magnet vorzugsweise auf die Stellstange aufgebracht wird, und der Magnetsensor sowie der Hilfsmagnet mit dem Motorgehäuse verbunden werden.

Besonders zweckmäßig und platzsparend ist es, wenn der Lagegeber-Magnet zylinderförmig ausgebildet ist und die Stellstange umgreift. Er kann auf die Stelltange beispielsweise aufgespritzt, aufgepreßt oder aufgeklebt werden.

Die Erfindung sieht auch ein Verfahren zum Herstellen des Linearmotors vor, bei dem der Lagegeber-Magnet in axialer Richtung auf die Stellstange derart aufgeschoben bzw. aufgepreßt wird, daß Montagetoleranzen des Motors, der Stellstange sowie des Sensors ausgeglichen werden. Hierzu wird der Motor in ein Haltewerkzeug eingespannt, und die Stellstange wird bis zu einer vorgegebenen Referenzposition ausgefahren, während der Magnetsensor am Motor montiert ist. Dann wird der Lagegeber-Magnet in axialer Richtung auf die Stellstange aufgeschoben, bis der Magnetsensor ein Referenzsignal erzeugt, das anzeigt, daß sich die Stellstange in ihrer Referenzposition befindet. In dieser so gefundenen Position wird der Lagegeber-Magnet auf der Stellstange fixiert. Auf diese Weise können sämtliche Montagetoleranzen des Motors und der Stellstange sowie des Magnetsensors ausgeglichen werden, weil ohne Rücksicht auf diese Toleranzen der Lagegeber-Magnet auf der Stellstange so angeordnet wird, daß er das Referenzsignal erzeugt, wenn sich die Stellstange in der Referenzposition befindet.

In einer bevorzugten Ausführung der Erfindung wird der Lagegeber-Magnet auf eine Hülse aus unmagnetischen Material aufgebracht, die ihrerseits auf die Stellstange aufgebracht, insbesondere aufgepreßt wird.

An einem Stirnende des Lagegeber-Magneten, das dem Motor zugewandt ist, möglicherweise auch an beiden Stirnenden wird ein Flußleitstück angeordnet.

Es kann vorgesehen sein, daß anstelle eines Magnetsensors zwei oder mehr Magnetsensoren, beispielsweise zwei Hall-Elemente, dem Lagegeber-Magneten zugeordnet sind. Diese Hall-Elemente sind in axialer Richtung hintereinander derart angeordnet, daß in dem Intervall zwischen den beiden Hall-Elementen eine "Mittellage" der Stellstange erkannt werden kann. Die mehreren Hall-Sensoren können getrennte Gehäuse aufweisen oder in einem einzigen Gehäuse verpackt sein. Vorzugsweise werden zwei Hall-Sensoren vorgesehen.

Die Erfindung ist im folgenden anhand einer bevorzugten Ausführung der Erfindung mit Bezug auf die Zeichnungen näher erläutert. In den Figuren zeigen:
- Fig. 1: eine schematische Schnittdarstellung eines Positionsgebers gemäß der Erfindung;
- Fig. 2: eine schematische Schnittdarstellung durch den Lagegeber-Magneten, der in dem Positionsgeber verwendet wird;
- Fig. 3: eine schematische Schnittdarstellung durch einen Linearmotor gemäß der Erfindung;
- Fig. 4: eine schematische Darstellung der Stellstange und des Lagegeber-Magneten aus dem Linearmotor der Fig. 3;
- Fig. 5: eine schematische, auseinandergezogene Perspektivdarstellung des Lagegeber-Magneten des Linearmotors der Fig. 3;
- Fig. 6a und 6b: Diagramme der Induktionskurven eines Magnetsensors des erfindungsgemäßen Positionsgebers bei unterschiedlichen Temperaturen;
- Fig. 7: ein Diagramm der Induktionskurven des Magnetsensors des erfindungsgemäßen Positionsgebers mit und ohne Flußleitstück;
- Fig. 8a und 8b: schematische Darstellungen zweiter alternativer Ausgestaltungen desLagegebert-Magneten; und
- Fig. 9: eine schematische Darstellung einer weiteren Ausgestaltung des Flußleitstückes.

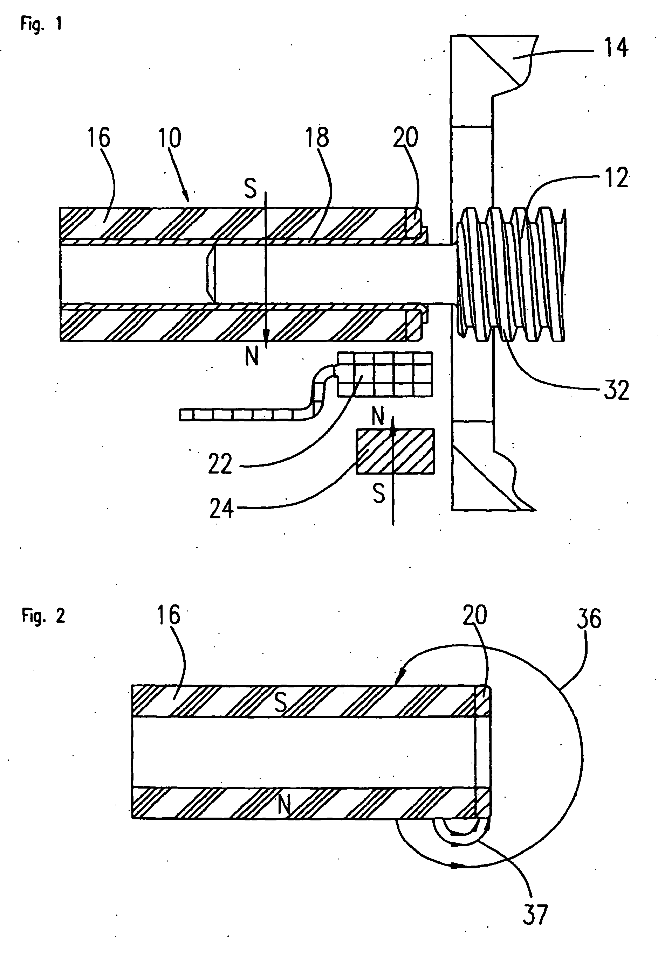

In der Schnittdarstellung der Fig. 1 ist der erfindungsgemäße Positionsgeber 10 dargestellt, der an dem freien Ende einer Stellstange oder -spindel 12 angeordnet, die in einem Motorgehäuse 14 gehalten und geführt ist.

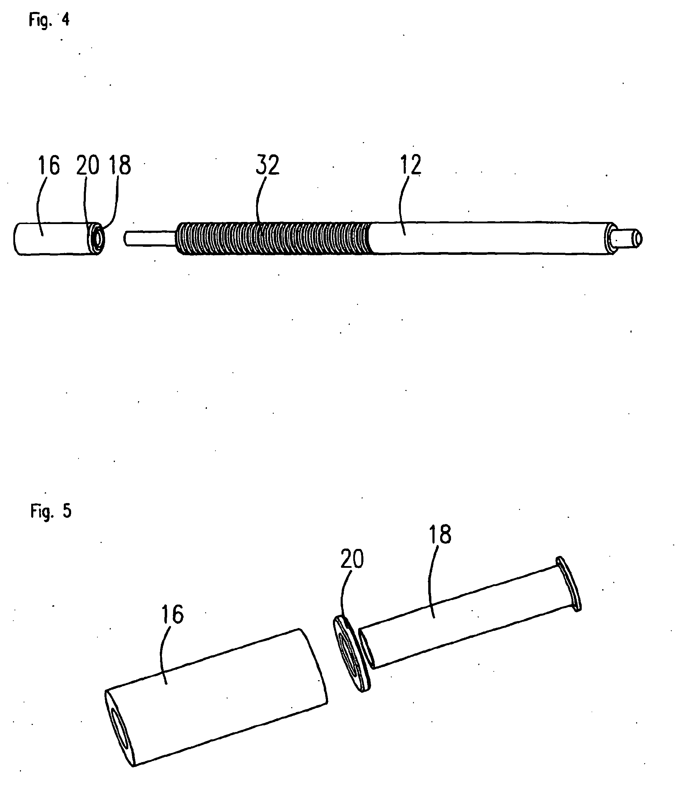

Der Positionsgeber umfaßt einen Lagegeber-Magneten 16, der in einer Hülse 18 auf der Stellstange 12 gehalten ist. An einem Stirnende des Lagegeber-Magneten 16 ist eine weichmagnetische Rückschlußscheibe 20 vorgesehen, die ebenfalls von der Hülse 18 gehalten wird. Anstelle der Rückschlußscheibe kann beispielsweise auch ein zum Lagegeber-Magneten gegensinnig magnetisierter Hilfsmagnet, ein Kurzschlußblech oder ein einfaches Seitenblech verwendet werden. Der Lagegeber-Magnet ist ein Dauermagnet, der beispielsweise durch Spritzen oder Pressen von Magnetpulver hergestellt ist. In der bevorzugten Ausführung hat er Zylinderform und wird, wie in Fig. 5 gezeigt, zusammen mit der Rückschlußscheibe 20 auf die Hülse 18 aufgeschoben bzw. aufgepreßt. Die Hülse 18 hat die Funktion, den Lagegeber-Magneten und das Flußleitstück auf der Stellstange zu halten. Vorzugsweise besteht die Hülse aus einem unmagnetischen Material, z.B. aus Messing.Dem Lagegeber-Magneten 16 ist ein Magnetsensor, insbesondere ein Hallelement 22 räumlich zugeordnet. Das Hallelement 22 ist dem Außenumfang des Lagegeber-Magneten 16 so zugeordnet, daß es eine Induktions-Spannungskurve mit einer steigenden bzw. fallenden Flanke erzeugt, wenn der Lagegeber-Magnet das Hallelement passiert und das von ihm erzeugte magnetische Feld das Hallelement 22 beaufschlagt. Einem bestimmten Spannungswert wird eine genau definierte Position der Stellspindel, die Referenzposition, zugeordnet. Diese Position kann beispielsweise so bestimmt werden, daß bei ihr die steigende oder fallende Flanke der Induktionsspannung einen Referenzpunkt kreuzt. Zu diesem Zweck sollte der Lagegeber-Magnet 16 in seiner Position auf der Stellspindel 12 einstellbar sein.

Die Absolutposition der Stellspindel kann dann durch Steuerung des Motors (in Fig. 2 nicht gezeigt) ausgehend von der bestimmten Referenzposition berechnet werden. Zur Bestimmung der Referenzposition ist das Hall-Element 22 mit einer Auswerteschaltung 44 verbunden.

Auf der von dem Lagegeber-Magneten 16 abgewandten Seite des Hallelements 22 ist ein Hilfsmagnet 24 angeordnet, dessen Magnetisierungsrichtung der Magnetisierungsrichtung des Lagegeber-Magneten 16 entgegengesetzt ist. Der Hilfsmagnet 24 besteht vorzugsweise aus demselben Magnetmaterial wie der Lagegeber-Magnet 16. Zum Ausgleichen thermischer Schwankungen sollte er aus einem Magnetmaterial mit im wesentlichen den gleichen thermischen Eigenschaften hergestellt sein wie das Magnetmaterial des Lagegeber-Magneten 16.

Der Hilfsmagnet 24 erzeugt ein Magnetfeld, das dem Magnetfeld des Lagegeber-Magneten 16 entgegengesetzt ist. Der Hilfsmagnet 24 ist ortsfest zu dem Hallelement 22 angeordnet, wobei beide vorzugsweise mit dem Motorgehäuse 14 gekoppelt sind. Das Magnetfeld des Hilfsmagneten 24 wirkt daher ständig auf das Hallelement 22 und erzeugt in diesem eine entsprechende Induktions-Vorspannung, der die durch den Lagegeber-Magneten 16 erzeugte Induktionsspannung überlagert wird. Da die beiden Magnete 16, 24 in entgegengesetzte Richtungen magnetisiert sind, gleichen sich Änderungen der magnetischen Feldstärke aufgrund von Temperaturschwankungen weitgehend aus. Ferner bewirkt der Hilfsmagnet 24 einen Offset der durch den Lagegeber-Magneten induzierte Spannungskennlinie. Die weichmagnetische Rückschlußscheibe 20, bzw. das Flußleitstück, hat die Wirkung, daß die Spannungskennlinie eine steilere Flanke im Bereich der Referenzposition des Lagegeber-Magneten 16 hat als ohne Hilfsmagnet 24, die dann, wenn sich das Hallelement 22 an der Referenzposition des Lagegeber-Magneten 16 befindet, die magnetische Feldstärke schneller abfallen läßt als dies ohne die Rückschlußscheibe 20 oder ein anderes Flußleitstück der Fall wäre.

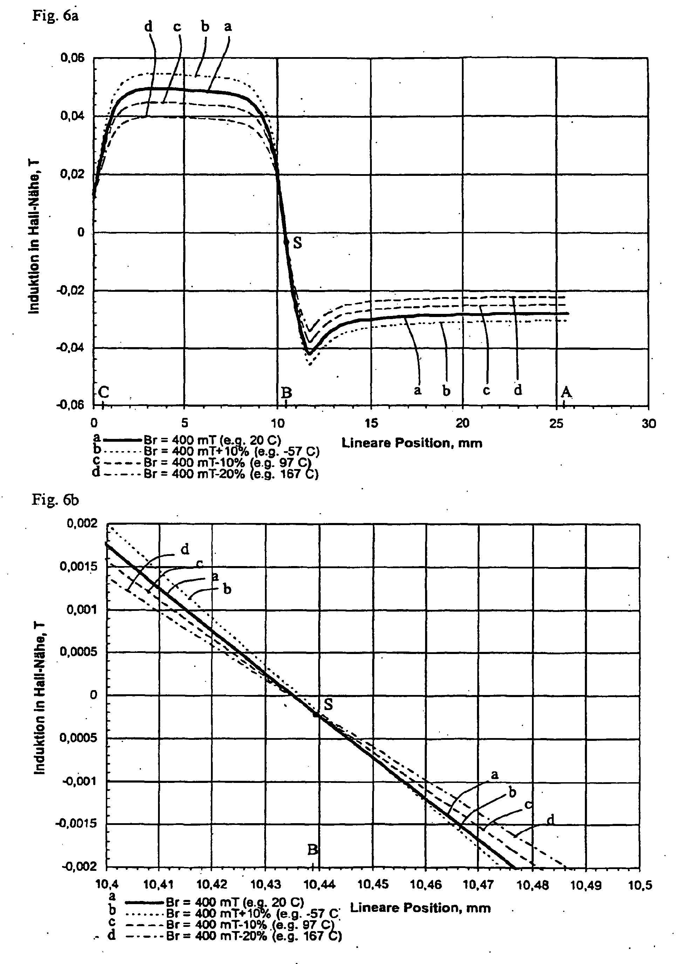

Fig. 2 zeigt in schematischer Schnittdarstellung eine Ansicht des Lagegeber-Magneten 16 in Kombination mit der weichmagnetischen Rückschlußscheibe 20, zur Erläuterung der Erfindung. Der Lagegeber-Magnet 16 ist quer zur Bewegungsrichtung der Stellstange 12 magnetisiert und erzeugt ein Magnetfeld, das durch die Feldlinie 36 angedeutet ist. Dieses Magnetfeld wirkt auf das Hallelement 22 und erzeugt in diesem eine Kennlinie, wie sie unten mit Bezug auf die Fig. 6a und 6b erläutert ist. Durch Vorsehen der Rückschlußscheibe 20 an dem Stirnende des Lagegeber-Magneten 16 (Referenzposition) kann die Flanke dieser Kennlinie deutlich steiler gemacht werden als ohne Rückschluß- bzw. Flußleitstück, weil durch die Rückschlußscheibe lokal eine Richtungsumkehr des Magnetfeldes bewirkt wird, wie durch die Feldlinien 37 angedeutet ist.

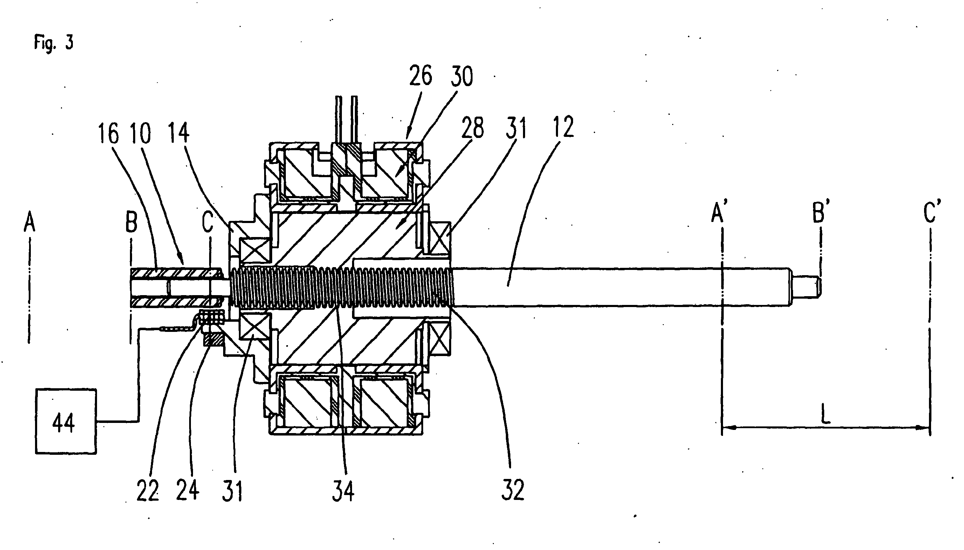

Fig. 3 und 4 zeigen in schematischer Darstellung den Positionsgeber der Fig. 2, der an dem freien Ende einer Stellspindel angebracht ist, welche in einem Linearmotor 26 geführt ist. Der Linearmotor 26 besteht in bekannter Weise aus dem Gehäuse 14, in dem die Stellstange oder
- spindel 12 in ihre Längsrichtung verschiebbar ist. Die Stellstange 12 ist in einem Rotor 28 gelagert, der über einen Stator 30 angetrieben wird. Der Rotor 28 ist über Kugellager 31 gegenüber dem Stator gelagert. Die Stellstange besteht vorzugsweise aus einem unmagnetischen Material. Die Drehbewegung des Rotors 28 wird über ein Gewinde 32 an der Stellstange 12 in eine Linearbewegung umgesetzt. Hierzu weist der Rotor 28 eine Mutter bzw. einen Innengewindebereich 34 auf, die mit dem Rotor rotiert. Der Gewindebereich 34 greift in das Außengewinde 32 ein, das auf die Stellstange 12 aufgebracht ist. Die Stellstange ist über einen Führungsstift (nicht gezeigt) gegen Verdrehung gesichert. Der Führungsstift wiederum wird in einer Führungsnut in axialer Richtung geführt. Dreht nun der Rotor 28, wird die Stellstange in axialer Richtung entlang der Führungsnut bewegt. Als Linearmotor 26 kann jeder Elektromotor eingesetzt werden, der die Rotationsbewegung des Rotors 28 in eine Linearbewegung der Stellstange 12 umsetzt. Im Stand der Technik werden hierzu häufig Schrittmotoren, beispielsweise ein Klauenpolschrittmotor eingesetzt. Die Erfindung ist jedoch auf keine bestimmte Motorart beschränkt.

Der erfindungsgemäße Positionslagegeber 10 ist an dem freien Ende der Stellstange 12 so angeordnet, daß das Hallelement 22 bei einer gewünschten Referenzposition der Stellstange 12 ein Ausgangssignal, insbesondere eine steigende oder fallende Flanke seiner Induktionsspannung erzeugt. Die relative Lagen des Lagegeber-Magneten 16 und des Hallelements 22 sollten dabei so gewählt werden, daß die Ausgangskennlinie des Hallelements 22 bei einer gewünschten Referenzposition einen Referenzwert, bspw. Null, oder einen anderen definierten Spannungswert annimmt. Zu diesem Zweck ist der Lagegeber-Magnet 16 vorzugsweise über die Hülse 18 einstellbar auf der Stellstange 12 fixiert, und das Hallelement 22 und der Hilfsmagnet 24 werden an dem Motorgehäuse 14 befestigt.

Der Aufbau des Lagegeber-Magneten 16, der gemeinsam mit der weichmagnetischen Rückschlußscheibe 20 auf die Hülse 18 aufgebracht ist, ist im einzelnen nochmals in Fig. 5 dargestellt.

In Fig. 3 sind verschiedene Lagen der Stellstange 12 mit den Großbuchstaben A, B und C gekennzeichnet. Eine erste Endposition (in der Zeichnung links) der Stellstange 12 ist mit A bezeichnet, und eine zweite Endposition (in der Zeichnung rechts) der Stellstange ist mit C bezeichnet. Eine Mittellage, die der Referenzposition entspricht, ist mit B bezeichnet. Die jeweils entsprechenden Endpositionen der Stellstange 12 an ihrem gegenüberliegenden Ende sind mit A', B' bzw. C' bezeichnet. Der Verstellweg L der Stellstange 12 ergibt sich aus der Differenz der Endlagen A und C bzw. A' und C'. Bei der Referenzposition B passiert das Stirnende des Lagegeber-Magneten 16, bei dem die Rückschlußscheibe 20 angeordnet ist, den Hallsensor 22. Die Länge des Lagegeber-Magneten 16 beträgt in Bewegungsrichtung vorzugsweise etwa die Hälfte des Verstellweges L der Stellstange 12 zwischen der ersten Endposition A und der zweiten Endposition C. Die Referenzposition B liegt dann vorzugsweise etwa in der Mitte des Stellweges. Wird der dargestellte Linearmotor beispielsweise zur Verstellung des Scheinwerfers eines Kraftfahrzeuges eingesetzt, so bedeutet dies eine Mittelstellung des Scheinwerfers als Referenzstellung. Gleiches gilt selbstverständlich für jedes andere Stellelement.

In der bevorzugten Ausführung der Erfindung ist der Lagegeber-Magnet 16 zylinderförmig ausgebildet und so dimensioniert und auf die Stellstange 12 aufgebracht, daß sein Außenumfang nicht oder nicht wesentlich größer ist als der Außenumfang des Gewindes 32 der Stellstange 12. Dadurch ist es möglich, daß der Lagegeber-Magnet 16 in das Lager 31 eintauchen kann, so daß der Verstellweg bis an den Gewindebereich 34 im Rotor 28 heranreichen kann. In diesem Zusammenhang ist zu bemerken, daß die Länge des Gewindebereichs 34 im Vergleich zur Länge des Gewindes 32 der Stellstange gering ist. Die Länge des Gewindebereichs 34 ist im wesentlichen abhängig von dem gewählten Material. Je höher der E-Modul des Materials ist, desto länger könnte die Mutter werden. In der bevorzugten Ausführung der Erfindung beträgt die Länge des Gewindebereichs 34 im Rotor ca. ein Zehntel bis ein Drittel des Gewindes 32 der Stellstange. Dadurch kann gerade bei einem Linearmotor mit geringer axialer Baulänge der Verstellweg L maximiert werden. Wird der Lagergeber-Magnet 16 in axialer Richtung auf die Stellstange 12 aufgepreßt, so können dabei Montagetoleranzen des Motors und der Stellstange ausgeglichen werden.

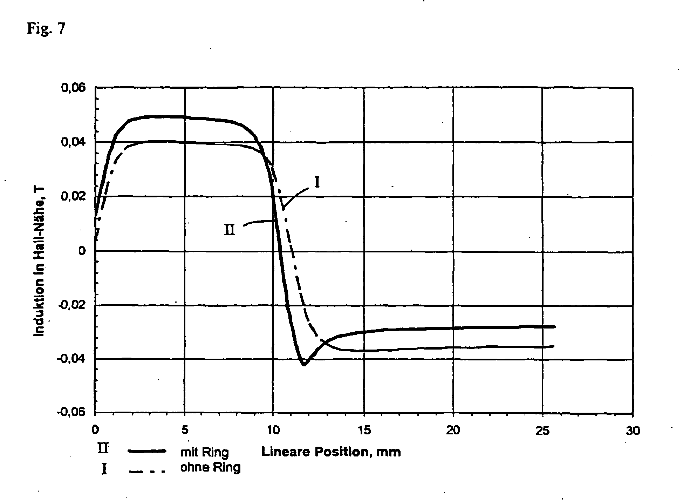

Die Graphiken der Fig. 6a und 6b zeigen mit unterschiedlichen Auflösungen die in dem erfindungsgemäßen Positionsgeber erzeugten magnetischen Induktionskurven abhängig von der relativen Position zwischen dem Lagegeber-Magneten 16 und dem Hallelement 22. In der in Fig. 6a gezeigten Skala von 0 bis 30 mm bewegt sich der Lagegeber-Magnet 16 (in Fig. 3 von rechts nach links) zunächst auf das Hallelement 22 zu und anschließend von dem Hallelement 22 weg. Die erste und die zweite Endposition A, C sowie die Referenzposition B erzeugen die in Fig. 6a gezeigten Signale. Im rechten Teil der Induktionskurve (A) der Fig. 6a hat der Lagegeber-Magnet 16 keinen Einfluß auf das Hallelement 22, und dessen magnetische Induktion wird alleine durch den Hilfsmagneten 24 erzeugt. Das Hallelement wird somit durch den Hilfsmagneten 24 in negativer Richtung magnetisch vorgespannt. Im linken Teil der Induktionskurve (C) der Fig. 6a liegen das Hallelement 22 und der Lagegeber-Magnet 16 einander gegenüber, so daß die magnetische Gesamtinduktion des Hallelements 22 durch die Differenz der magnetischen Feldstärken der beiden Magnete 16 und 24 bestimmt wird. Im mittleren Bereich der Induktionskurve (B) der Fig. 6a bewegt sich der Lagegeber-Magnet 16 in seine Referenzposition. Dabei fällt die magnetische Induktion an dem Hallelement 22 ab, wobei der steile Abfall der Induktionskurve maßgeblich durch die Rückschlußscheibe 20 bestimmt wird. Wie ein Vergleich der Kurven der Fig. 6a und 7 zeigt, ist der Abfall der Induktionskurve dann, wenn kein Flußleitstück vorgesehen wird (Kurve I), wesentlich weniger steil als in dem Fall, daß ein Flußleitstück vorgesehen wird (Kurve II). Aus der Darstellung der Fig. 6a wird ferner der Einfluß der Temperatur auf die Induktionskurve deutlich. Während die Absolutwerte der Induktionskurve abseits der Referenzposition abhängig von der Temperatur und somit der magnetischen Feldstärke der beiden Magnete 16, 24 unterschiedlich ist, bewirkt das Zusammenspiel der beiden Magnete 16, 24, daß der Nulldurchgang der Induktionskurve (Schaltpunkt S), d.h. der zur Bestimmung der Referenzposition maßgebliche Wert, unabhängig von der Temperatur immer gleich ist. Dies verdeutlicht die vergrößerte Darstellung der Fig. 6b, wobei die in Fig. 6b erkennbare Abweichung von etwa 0,0003 Tesla von der gewünschten Referenzpunktlage hinnehmbar ist.

Aus Fig. 6a ergeben sich ferner die Temperaturkennlinien eines Magneten, der eine Remanenz mit einem Nennwert von 400 mT bei Raumtemperatur (ungefähr 20° C) aufweist. Sinkt die Umgebungstemperatur auf beispielsweise -57° C, so steigt die Remanenz um 10 %, d.h. auf ungefähr 440 mT. Steigt die Umgebungstemperatur auf beispielsweise +97° C, so verringert sich die Remanenz um 10 %, d.h. auf ungefähr 360 mT. Steigt die Temperatur weiter auf beispielsweise 167° C, so verringert sich die Remanenz um insgesamt 20 %, d.h. auf ungefähr 320 mT. Mit der Veränderung der Remanenz in einem Lagegeber-Magneten ändert sich nicht nur der Absolutwert des Ausgangssignals, das von einem korrespondierenden Magnetsensor erzeugt wird, sondern auch der Steigungswinkel an der Referenzposition des Lagegeber-Magneten.

Ohne die Verwendung eines Flußleitstückes, beispielsweise der Rückschlußscheibe 20, und gegebenenfalls des Hilfsmagneten 24 ergäben sich temperaturabhängige Abweichungen sowohl der Absolutwerte als auch der Steigungen der Induktionskurven von 10 bis 20 %, was für ein Positionsgeber in vielen Anwendungen nicht akzeptabel ist. Die Erfindung schafft dagegen einen Positionsgeber zur Verwendung in einem Linearmotor, der einen konstanten Schaltpunkt S für eine Referenzposition vorgibt, der unabhängig von der Temperatur ist. Dieser Schaltpunkt S kann mit Hilfe des Hilfsmagneten nach Bedarf justiert werden.

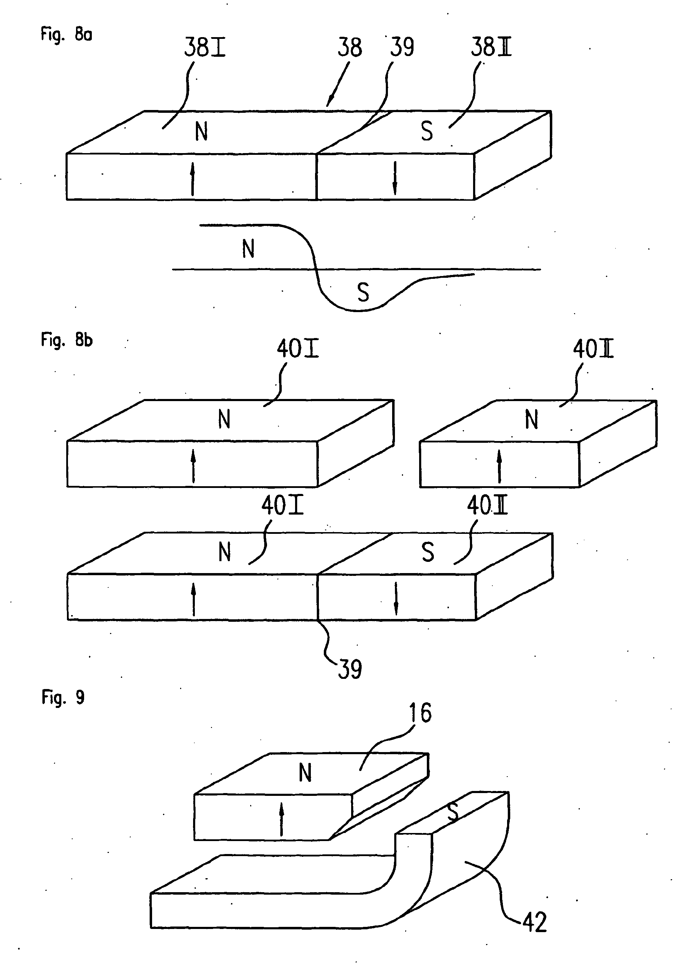

Fig. 8a zeigt eine schematische Darstellung einer weiteren Ausführung des Lagegeber-Magneten. In der Ausführung der Fig. 8a sind der Lagegeber-Magnet aus einem einteiligen, stabförmigen (wie in der Figur gezeigt) oder zylindrischen Magneten 38 gebildet, der in einem ersten und einem zweiten Bereich 38I, 38II gegensinnig magnetisiert ist. Der zweite Bereich 38II bildet einen räumlich begrenzten magnetischen Gegenpol zu dem ersten Bereich 38I, wobei der erste Bereich 38I dem Lagegeber-Magneten entspricht und der zweite Bereich 38II dem Flußleitstück entspricht. An der Grenze 39 zwischen dem ersten und dem zweiten Bereich 38I, 38II erzeugt der Magnet 38 dann, wenn er an dem Magnetsensor vorbeibewegt wird, ein Umschaltsignal oder Referenzsignal. Die Magnetkennlinie des Magneten 38 ist in Fig. 8a unten schematisch dargestellt. Die Magnetisierungsrichtung ist durch Pfeile gekennzeichnet. Bei dieser Ausführung ist es möglich, Montagetoleranzen des Motors, der Stellstange und des Sensors dadurch auszugleichen, daß die Magnetpole in den Bereichen 38I, 38II erst nach der Montage des Lagegeber-Magneten bei der Referenzfahrt magnetisiert werden.

Um den Verfahrweg der Stellstange nicht zu stark einzuschränken, ist der zweite zur Abtriebsseite des Linearmotors weisende Bereich 38II des Magneten 38 vorzugsweise kürzer als der erste Bereich 38I. Das Verhältnis der Länge des ersten zum zweiten Bereich 38I:38II liegt vorzugsweise zwischen 1:1 und 15:1. Gegebenenfalls kann der zweite Bereich 38II, der dem Flußleitstück entspricht, stärker magnetisiert werden, um einen ausreichend wirksamen Gegenpol zu dem ersten Bereich 38I zu bilden. Vorzugsweise haben beide Bereiche ein ähnliches Temperaturverhalten. In der Regel wird es jedoch nicht möglich sein, den zweiten Bereich 38II im Vergleich zum ersten Bereich 38I ähnlich kurz zu machen wie bei der in Fig. 1 gezeigten Ausführung, bei der das Flußleitstück durch eine einfache Rückschlußscheibe 20 gebildet wird.

Fig. 8b zeigt eine alternative Ausführung des Lagegeber-Magneten, die ähnlich ist wie die Ausführung der Fig. 8a, wobei der Lagegeber-Magnet jedoch zweiteilig ausgebildet ist. In einer besonders einfachen Ausführung werden zwei gleichsinnig magnetisierte Magnetstücke 40I, 40II, wie in Fig. 8b oben dargestellt, vorgesehen, wobei eines dieser Magnetstücke 40II um 180° gedreht wird, um so einen zusammengesetzten Lagegeber-Magneten zu bilden, wobei das gedrehte Magnetstück 40II (das dem Flußleitstück entspricht) wiederum einen räumlich begrenzten, magnetischen Gegenpol zu dem zweiten Magnetstück 40II (das dem Lagegeber-Magneten entspricht) bildet. Die Ausführung der Fig. 8b hat im Vergleich zu der Fig. 8a den Vorteil, daß die Grenze 39 zwischen den beiden Magnetstücken 40I und 40II präziser definiert ist, so daß diese Anordnung in dem Magnetsensor ein Signal mit einer steileren Flanke erzeugt. Auch in der Figur 8b ist wie in der Figur 8a vorzugsweise das Magnestück 40I länger als das zweite Magnetstück 40II.

Eine weitere Ausführung des Lagegeber-Magneten ist in Fig. 9 gezeigt. Dem Lagegeber-Magneten 16 ist in dieser Ausführung ein gebogenes Blech 42 zugeordnet, das die Funktion des Flußleitstückes übernimmt. Das Blech 42 hat eine ähnliche Wirkung wie die Rückschlußscheibe 20, die in Fig. 1 gezeigt ist.

Die in der vorstehenden Beschreibung, den Ansprüchen und den Figuren offenbarten Merkmale können sowohl einzeln als auch in beliebiger Kombination für die Verwirklichung der Erfindung in ihren verschiedenen Ausführungen von Bedeutung sein.

### Bezugszeichenliste

- 10: Positionsgeber
- 12: Stellstange/spindel
- 14: Motorgehäuse
- 16: Lagegeber-Magnet
- 18: Hülse
- 20: Flußleitstück
- 22: Magnetsensor, Hallelement
- 24: Hilfsmagnet
- 26: Linearmotor
- 28: Rotor
- 30: Stator
- 31: Kugellager
- 32: Gewinde der Stellstange
- 34: Gewindebereich des Rotors
- 36: Feldlinie
- 37: Feldlinie
- 38: Lagegeber-Magnet
- 38I, 38II: Magnetbereiche
- 39: Grenze
- 40I, 40II: Magnetstücke
- 42: Blech
- 44: Auswerteschaltung
- A, A': erste Endposition
- B, B': Referenzposition
- C, C': zweite Endposition
- S: Schaltpunkt
- L: Verstellweg

## Patentansprüche

1. Positionsgeber für ein Stellelement (12), das innerhalb eines Rahmens (14) in einer vorgegebenen Richtung linear verschoben wird, mit
einem Lagegeber-Magneten (16) und
einem Magnetsensor (22), der dem Lagegeber-Magneten (16) gegenüberliegt,
wobei der Lagegeber-Magnet (16) mit dem Stellelement (12) oder dem Rahmen (14) verbunden ist und der Magnetsensor (22) mit dem anderen der beiden verbunden ist, so daß aus der Relativbewegung des Lagegeber-Magneten (16) zu dem Magnetsensor (22) die Position des Stellelements (12) im Verhältnis zu dem Rahmen (14) ermittelbar ist, **gekennzeichnet durch** ein Flußleitstück (20), das an einer Stirnseite des Lagegeber-Magneten (16) angeordnet ist, wobei der Magnetsensor (22) dazu geeignet ist, eine Signalflanke zu erzeugen, wenn diese Stirnseite des Lagegeber-Magneten (16) an dem Magnetsensor (22) vorbeibewegt wird.

2. Positionsgeber nach Anspruch 1, **dadurch gekennzeichnet, daß** das Flußleitstück eine weichmagnetische Rückschlußscheibe (20), ein Magnetstück, das zu dem Lagegeber-Magneten (16) gegensinnig magnetisiert ist, ein Kurzschlußblech oder ein Seitenblech umfaßt.

3. Positionsgeber nach einem der vorangehenden Ansprüche, **dadurch gekennzeichnet, daß** die Länge des Lagegeber-Magneten (16) ungefähr gleich der Hälfte der Länge des maximalen Verstellweges (L) des Stellelementes (12) ist.

4. Positionsgeber nach einem der vorangehenden Ansprüche, **dadurch gekennzeichnet, daß** der Magnetsensor ein Hall-Element (22) umfaßt.

5. Positionsgeber nach einem der vorangehenden Ansprüche, **gekennzeichnet durch** einen Hilfsmagneten (24), der dem Magnetsensor (22) zugeordnet ist, wobei der Hilfsmagnet (24) auf der von dem Magnetsensor (22) abgewandten Seite des Lagegeber-Magneten (16) ortsfest zu dem Magnetsensor (22) angeordnet ist und seine magnetische Ausrichtung zu der des Lagegeber-Magneten (16) entgegengesetzt ist, wobei das Material des Lagegeber-Magneten (16) und das Material des Hilfsmagneten (24) im wesentlichen die gleichen thermischen Eigenschaften haben.

6. Positionsgeber nach Anspruch 5, **dadurch gekennzeichnet, daß** der Lagegeber-Magnet (16) und der Hilfsmagnet (24) aus demselben Magnetmaterial hergestellt sind.

7. Positionsgeber nach Anspruch 5 oder 6, **dadurch gekennzeichnet, daß** der Lagegeber-Magnet (16) mit dem Stellelement (12) verbunden ist und der Magnetsensor (22) und der Hilfsmagnet (24) mit dem ortsfesten Rahmen (14) gekoppelt sind.

8. Linearmotor mit einer Stellstange (12), die in ihrer Längsrichtung innerhalb eines Motorgehäuses (14) verschiebbar ist, und mit einem Positionsgeber nach Anspruch 7, **dadurch gekennzeichnet, daß** der Lagegeber-Magnet (16) auf die Stellstange (12) aufgebracht ist und der Magnetsensor (22) sowie der Hilfsmagnet (24) mit dem Motorgehäuse (14) verbunden sind.

9. Linearmotor nach Anspruch 8, **dadurch gekennzeichnet, daß** der Lagegeber-Magnet (16) zylinderförmig ausgebildet ist und die Stellstange (12) umgreift.

10. Linearmotor nach Anspruch 9, **dadurch gekennzeichnet, daß** der Lagegeber-Magnet (16) auf die Stellstange (12) aufgespritzt, aufgepreßt oder aufgeklebt ist.

11. Linearmotor nach Anspruch 8, **dadurch gekennzeichnet, daß** der Lagegeber-Magnet stabförmig ausgebildet ist und sich parallel zur Stellstange erstreckt.

12. Linearmotor nach einem der Ansprüche 8 bis 11, **dadurch gekennzeichnet, daß** der Lagegeber-Magnet (16) auf eine Hülse (18) aus unmagnetischem Material aufgebracht ist, wobei die Hülse (18) auf die Stellstange (12) aufgebracht, insbesondere aufgepreßt ist.

13. Linearmotor nach einem der Ansprüche 8 bis 12, **dadurch gekennzeichnet, daß** der Positionsgeber auf der dem Abtrieb entgegengesetzten Seite des Linearmotors angeordnet ist.

14. Verfahren zum Herstellen eines Linearmotors nach einem der Ansprüche 8 bis 13, **dadurch gekennzeichnet, daß** der Magnetsensor an dem Motor montiert wird, die Stellstange in eine vorgegebene Referenzposition gefahren wird, und der Lagegeber-Magnet in axialer Richtung auf die Stellstange aufgeschoben wird, bis der Magnetsensor ein Referenzsignal erzeugt, und der Lagegeber-Magnet in der so ermittelten Referenzposition auf der Stellstange fixiert wird.

## Claims

1. Position transducer for an actuator (12) which is displaced linearly along a predetermined direction within a frame (14), comprising:
a position transducer magnet (16) and
a magnet sensor (22) opposite to the position transducer magnet (16),
wherein the position transducer magnet (16) is connected to one of the actuator (12) and the frame (14) and wherein the magnet sensor (22) is connected to the other one of the actuator and the frame so that the position of the actuator (12) relative to the frame (14) can be determined based on the relative movement between the position transducer magnet (16) and the magnet sensor (22), **characterized by** a flux-conducting component (20) disposed on one front face of the position transducer magnet (16) wherein the magnet sensor (22) is adapted to generate a signal edge when the front face of the position transducer magnet (16) is moved past the magnet sensor (22).

2. Position transducer according to claim 1, **characterized in that** the flux-conducting component comprises a magnetically soft back iron disk (20), a magnetic piece which is magnetized in the same sense as the position transducer magnet (16), a short-circuit sheet or a lateral sheet.

3. Position transducer according to one of the preceding claims, **characterized in that** the length of the position transducer magnet (16) is about one half of the length of the maximum linear displacement (L) of the actuator (12).

4. Position transducer according to one of the preceding claims, **characterized in that** the magnet sensor comprises a Hall element (22).

5. Position transducer according to one of the preceding claims, **characterized by** an auxiliary magnet (24) which is associated to the magnet sensor (22) wherein the auxiliary magnet (24) is disposed on that side of the position transducer magnet (16) facing away from the magnet sensor (22) and is stationary to the magnet sensor (22), wherein its magnetic orientation is opposite to that of the position transducer magnet (16), wherein the material of the position transducer magnet (16) and the material of the auxiliary magnet (24) have substantially equal thermal properties.

6. Position transducer according to claim 5, **characterized in that** the position transducer magnet (16) and the auxiliary magnet (24) are made from the same magnetic material.

7. Position transducer according to claims 5 or 6, **characterized in that** the position transducer magnet (16) is associated with the actuator (12) and the magnet sensor (22) and the auxiliary magnet (24) are associated with the stationary frame (14).

8. Linear motor comprising an actuating rod (12) which is displaceable in its longitudinal direction within a motor housing (14), and further comprising a position transducer according to claim 7 **characterized in that** the position transducer magnet (16) is mounted on the actuating rod (12) and the magnet sensor (22) and the auxiliary magnet (24) are connected to the motor housing (14).

9. Linear motor according to claim 8, **characterized in that** the position transducer magnet (16) has the shape of a cylinder and encompasses the actuating rod (12).

10. Linear motor according to claim 9, **characterized in that** the position transducer magnet (16) is injected, pressed or glued onto the actuating rod (12).

11. Linear motor according to claim 8, **characterized in that** the position transducer magnet is formed to have a rod shape and extends parallel to the actuating rod.

12. Linear motor according to one of claims 8 to 11, **characterized in that** the position transducer magnet (16) is mounted on a sleeve (18) made from a non-magnetic material wherein the sleeve (18) is mounted on the actuating rod (12), in particular pressed onto the rod.

13. Linear motor according to one of claims 8 to 12, **characterized in that** the position transducer magnet is arranged on a side of the linear motor opposite to its output.

14. Method for manufacturing a linear motor according to one of claims 8 to 13, **characterized in that** the magnet sensor is mounted at the motor, the actuating rod is moved into a predetermined reference position and the position transducer magnet is slid onto the actuating rod in an axial direction until the magnetic sensor generates a reference signal, and that the position transducer magnet is fixed on the actuating rod in the reference position thus determined.

## Revendications

1. Indicateur de position pour un élément de commande (12), qui est déplacé de manière linéaire dans un sens prédéfini à l'intérieur d'un bâti (14), avec
un aimant de l'indicateur de position (16) et
un capteur magnétique (22) qui fait face à l'aimant de l'indicateur de position (16),
l'aimant de l'indicateur de position (16) étant relié à l'élément de commande (12) ou au bâti (14) et le capteur magnétique (22) étant relié à l'autre des deux de sorte que la position de l'élément de commande (12) par rapport au bâti (14) puisse être déterminée à partir du mouvement relatif de l'aimant de l'indicateur de position (16) par rapport au capteur magnétique (22),
**caractérisé par** une pièce conductrice de flux (20), qui est disposée sur une face frontale de l'aimant de l'indicateur de position (16), le capteur magnétique (22) convenant pour générer un flanc de signal, lorsque cette face frontale de l'aimant de l'indicateur de position (16) est déplacée devant le capteur magnétique (22).

2. Indicateur de position selon la revendication 1, **caractérisé en ce que** la pièce conductrice de flux comprend un disque de retour (20) magnétique doux, une pièce magnétique, qui est aimantée dans le sens inverse à celui de l'aimant de l'indicateur de position (16), une tôle de court-circuit ou une tôle latérale.

3. Indicateur de position selon l'une quelconque des revendications précédentes, **caractérisé en ce que** la longueur de l'aimant de l'indicateur de position (16) est à peu près égale à la moitié de la longueur du parcours maximal (L) de l'élément de commande (12).

4. Indicateur de position selon l'une quelconque des revendications précédentes, **caractérisé en ce que** le capteur magnétique comprend un élément à effet Hall (22).

5. Indicateur de position selon l'une quelconque des revendications précédentes, **caractérisé par** un aimant auxiliaire (24), qui est affecté au capteur magnétique (22), dans lequel l'aimant auxiliaire (24) est disposé de manière fixe par rapport au capteur magnétique (22) sur le côté de l'aimant de l'indicateur de position (16) opposé au capteur magnétique (22) et son orientation magnétique est opposée à celle de l'aimant de l'indicateur de position (16), dans lequel le matériau de l'aimant de l'indicateur de position (16) et le matériau de l'aimant auxiliaire (24) ont sensiblement les mêmes propriétés thermiques.

6. Indicateur de position selon la revendication 5, **caractérisé en ce que** l'aimant de l'indicateur de position (16) et l'aimant auxiliaire (24) sont fabriqués à partir du même matériau magnétique.

7. Indicateur de position selon la revendication 5 ou 6, **caractérisé en ce que** l'aimant de l'indicateur de position (16) est relié à l'élément de commande (12) et le capteur magnétique (22) et l'aimant auxiliaire (24) sont couplés avec le bâti fixe (14).

8. Moteur linéaire avec une tige de commande (12), qui peut être déplacée dans son sens longitudinal à l'intérieur d'un carter moteur (14), et avec un indicateur de position selon la revendication 7, **caractérisé en ce que** l'aimant de l'indicateur de position (16) est monté sur la tige de commande (12) et le capteur magnétique (22) ainsi que l'aimant auxiliaire (24) sont reliés au carter moteur (14).

9. Moteur linéaire selon la revendication 8, **caractérisé en ce que** l'aimant de l'indicateur de position (16) est réalisé de manière cylindrique et entoure la tige de commande (12).

10. Moteur linéaire selon la revendication 9, **caractérisé en ce que** l'aimant de l'indicateur de position (16) est appliqué au pistolet, emmanché par pression ou collé sur la tige de commande (12).

11. Moteur linéaire selon la revendication 8, **caractérisé en ce que** l'aimant de l'indicateur de position est réalisé en forme de barre et s'étend parallèlement à la tige de commande.

12. Moteur linéaire selon l'une quelconque des revendications 8 à 11, **caractérisé en ce que** l'aimant de l'indicateur de position (16) est monté sur une douille (18) en matériau non magnétique, la douille (18) étant montée, en particulier emmanchée par pression, sur la tige de commande (12).

13. Moteur linéaire selon l'une quelconque des revendications 8 à 12, **caractérisé en ce que** l'indicateur de position est agencé sur le côté du moteur linéaire opposé à la sortie.

14. Procédé de fabrication d'un moteur linéaire selon l'une quelconque des revendications 8 à 13, **caractérisé en ce que** le capteur magnétique est monté sur le moteur, la tige de commande est amenée dans une position de référence prédéterminée et l'aimant de l'indicateur de position est poussé sur la tige de commande dans le sens axial, jusqu'à ce que le capteur magnétique génère un signal de référence, et l'aimant de l'indicateur de position est fixé sur la tige de commande dans la position de référence ainsi déterminée.
